# EUROPÄISCHE PATENTSCHRIFT

(11) **EP 1 229 622 B1**
(45) Veröffentlichungstag und Bekanntmachung des Hinweises auf die Patenterteilung: **02.03.2005**
(21) Anmeldenummer: 01130863.2
(22) Anmeldetag: 27.12.2001
(51) Int. Cl.: H02G 3/04, H02G 3/30

(54) **Abschlusskappe für eine Tragschiene**
End cap for a mounting rail
Embout pour un rail support

(30) Priorität: 31.01.2001 DE 20101706 U
(43) Veröffentlichungstag der Anmeldung: 07.08.2002
(73) Patentinhaber: Zumtobel Staff GmbH, 6850 Dornbirn (AT)
(72) Erfinder: Riedler, Thomas Ing., A-6060 Hall / Tirol (AT)
(74) Vertreter: Schmidt-Evers, Jürgen, Dipl.-Ing.

(56) Entgegenhaltungen:
- EP-A- 0 849 851
- US-A- 3 840 140

## Beschreibung

Die vorliegende Erfindung betrifft eine Abschlußkappe für eine Tragschiene eines Stromschienensystems bzw. eine an ihrer Stirnseite mit einer Abschlußkappe versehene Tragschiene.

Stromschienensysteme oder Lichtbänder weisen gegenüber fest installierten oder eingebauten Leuchten eine höhere Flexibilität bei der Planung von Beleuchtungsstrukturen für spezifische Anforderungen auf. Derartige Systeme bestehen aus mehreren einzelnen Elementen, die nach dem Baukasten-Prinzip zusammengesetzt werden, so daß die gesamte Anordnung an die zu beleuchtenden Räumlichkeiten angepaßt werden kann. Dabei sind Lichtbandsysteme bekannt, mit denen nicht nur zweidimensionale, sondern auch dreidimensionale Strukturen gebildet werden können.

Das Grundgerüst eines derartigen Stromschienensystems wird durch Tragschienen gebildet, die zu der gewünschten Struktur zusammengesetzt werden und der Halterung der einzelnen Leuchten dienen. Die vorliegende Erfindung betrifft dabei in erster Linie U-förmige Tragschienen, welche mit ihrem Mittelschenkel an einem Träger, z.B. einer Raumdecke oder Raumwand befestigt werden. An den Tragschienen werden dann wiederum die einzelnen Leuchten-Module befestigt.

Um die Stromversorgung für die Leuchten sicherzustellen, verlaufen an oder innerhalb der Tragschienen entsprechende Leitungen. Zusätzlich können neben diesen Leitungen zur Stromversorgung auch weitere Leitungen für die Übertragung von Steuersignalen vorgesehen sein, wodurch sich die Möglichkeit eröffnet, bei Verwendung eines geeigneten Steuersystems die einzelnen Leuchten individuell anzusteuern und zu dimmen. Ein derartiges Lichtbandsystem wird beispielsweise von der Anmelderin unter der Bezeichnung "Lichtbandsystem ZX" vertrieben.

Die Stirnseiten der Tragschienen werden, sofern sie nicht an weitere Tragschienen angrenzen, aus optischen sowie aus Staubschutz-Gründen durch einfache Kappen verschlossen. Um Stromversorgungs- und/oder Datenübertragungsleitungen in die Tragschiene einführen zu können, weisen diese Kappen üblicherweise an ihrer Stirnseite eine Sollbruchstelle auf, welche im Bedarfsfall aufgebrochen werden kann, so daß eine geeignete Austrittsöffnung für die Leitungen entsteht. Dies bedeutet, daß sämtliche Kabel stirnseitig herausgeführt bzw. eingeführt werden müssen, beispielsweise auch dann, wenn das Stromschienensystem nicht über Kabel oder Ketten abgehängt sondern direkt auf eine Decke aufgesetzt ist.

Im letztgenannten Fall ist es dann notwendig, zumindest eine U-förmige Schleife mit dem Kabelbündel zu bilden, um dieses dann ausgehend von der Versorgungsstelle in die Austrittsöffnung der Tragschiene einführen zu können.

Eine Abschlußkappe gemäß dem Oberbegriff des Anspruchs 1 und eine Tragschiene gemäß dem Oberbegriff des Anspruchs 6 sind aus US-A-3 840 140 bekannt.

Der vorliegenden Erfindung liegt daher die Aufgabe zugrunde, die Abschlußkappe für die Tragschiene bzw. das Stromschienensystem derart zu gestalten, daß Kabelbündel sowohl stirnseitig als auch rechtwinklig dazu in die Tragschiene ein- bzw. ausgeführt werden können.

Die Aufgabe wird durch eine Abschlußkappe für eine Tragschiene eines Stromschienensystems entsprechend dem Anspruch 1 gelöst. Sie zeichnet sich erfindungsgemäß dadurch aus, daß die in der Abschlußkappe vorgesehene Austrittsöffnung sich nicht nur an deren Stirnseite befindet, sondern sich in zwei zueinander senkrecht angeordneten Ebenen erstreckt, wobei die eine Ebene im wesentlichen parallel und die andere Ebene im wesentlichen senkrecht zur Längsrichtung der Tragschiene angeordnet ist. Dadurch können die Kabel sowohl stirnseitig als auch senkrecht dazu ein- bzw. ausgeführt werden, so daß außerhalb der Tragschiene vorzusehende Schleifen für die Kabelbündel vermieden werden können.

Weiterbildungen der Erfindung sind Gegenstand der Unteransprüche. So erstreckt sich die Austrittsöffnung vorzugsweise in Richtung der Stirnseite und der Kopfseite der Tragschiene, wobei die Abschlußkappe dann durch eine die Stirnseite bildende Wand sowie ein senkrecht dazu angeordnetes Kopfteil gebildet wird. Dieses Kopfteil ist vorzugsweise derart ausgestaltet, daß es in eine an der Kopfseite der Tragschiene vorgesehene Ausnehmung eingreift.

Um zu vermeiden, daß eine Sollbruchstelle durchbrochen werden muß, welche anschließend nicht wieder verschließbar ist, kann gemäß einer vorteilhaften Weiterbildung der Erfindung eine an einer Seite der Austrittsöffnung befestigte und diese zumindest teilweise verschließende ausbiegbare Zunge vorgesehen sein. Hierdurch wird gleichzeitig das Eindringen von Staub vermieden.

Die Erfindung wird ferner durch eine Tragschiene für ein Stromschienensystem mit zumindest einer an einer Stirnseite der Tragschiene angeordneten Abschlußkappe gelöst, welche eine Austrittsöffnung für Stromversorgungs- und/oder Datenübertragungsleitungen aufweist bzw. in Zusammenwirkung mit der Tragschiene eine Austrittsöffnung bildet, wobei sich die Austrittsöffnung in zwei zueinander senkrecht angeordneten Ebenen erstreckt, wobei die eine Ebene im wesentlichen parallel und die andere Ebene im wesentlichen senkrecht zur Längsrichtung der Tragschiene angeordnet ist.

Im folgenden soll die Erfindung anhand der beiliegenden Zeichnung näher erläutert werden. Es zeigen:
Fig. 1 ein Ausführungsbeispiel der erfindungsgemäßen Kappe in perspektivischer Darstellung in Aufsicht;
Fig. 2 die Stirnseite der in Fig. 1 dargestellten Abschlußkappe;
Fig. 3 und 4 verschiedene Ansichten der Innenseite der Abschlußkappe; und
Fig. 5 zwei Tragschienen, die stirnseitig jeweils mit der erfindungsgemäßen Abschlußkappe verschlossen sind.

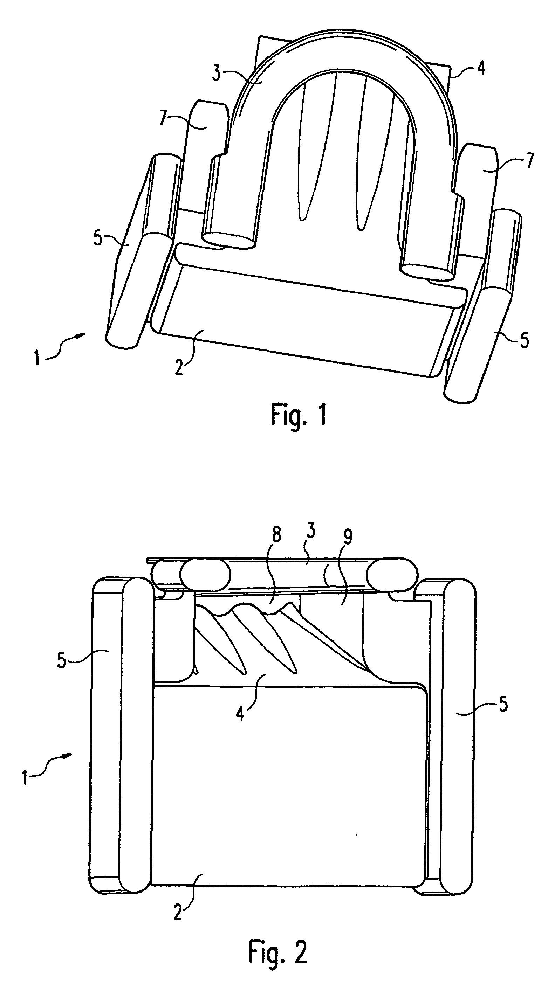

Die in den Figuren 1 bis 4 dargestellte Abschlußkappe 1 besteht im wesentlichen aus einer Stirnwand 2 sowie einem an der Oberseite der Stirnwand 2 angeordneten und sich senkrecht dazu erstreckende Kopfteil 3.

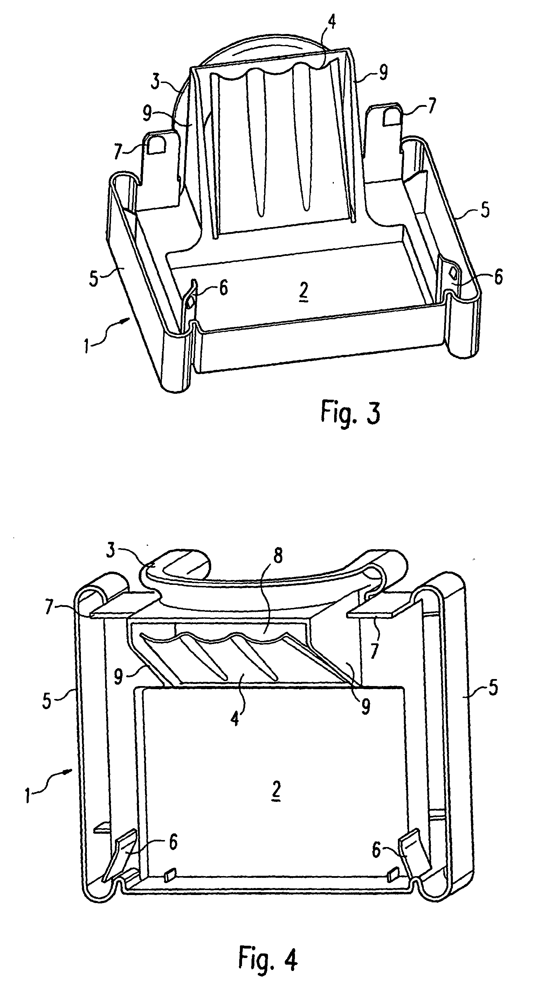

Die Stirnwand 2 wird an den beiden an das Kopfteil 3 angrenzenden Seiten von zwei Seitenwänden 5 begrenzt, die - wie den beiden Innenansichten der Figuren 3 und 4 zu entnehmen ist - derart ausgebildet sind, daß die Abschlußkappe 1 auf das U-förmige Profil einer Tragschiene aufgesteckt werden kann. Um den Halt der Abschlußkappe 1 auf der Tragschiene zu verbessern, sind an den Unterseiten der Seitenwände 5 jeweils zwei Klemmelemente 6 sowie an der Oberseite der Stirnwand 2 zwei weitere Klemmelemente 7 vorgesehen, welche für ein Verrasten der Abschlußkappe 1 mit der Tragschiene sorgen.

Das Kopfteil 3 wird im wesentlichen durch einen Halbring 3 gebildet, der sich von der Oberkante der Stirnwand 2 senkrecht dazu erstreckt. Dieser Halbring 3 ist dafür vorgesehen, in eine entsprechende Ausnehmung an der Kopfseite der Tragschiene einzugreifen. Gleichzeitig begrenzt der Halbring 3 eine an die Oberkante der Stirnwand 2 angrenzende und in der Ebene der Stirnwand 2 liegende Öffnung 8, von der sich ebenfalls senkrecht dazu zwei Seitenwände 9 in Richtung des Halbringes 3 erstrecken.

Die gesamte Austrittsöffnung zum Ein- und Ausführen von Kabelsträngen wird somit durch die in der Stirnseite angeordnete Öffnung 8 sowie den von dem Halbring 3 umschlossenen Bereich begrenzt. Da sich die Austrittsöffnung somit in zwei Ebenen erstreckt, nämlich parallel zur Längsrichtung der Tragschiene als auch senkrecht dazu, können Kabelstränge sowohl in Längsrichtung als auch senkrecht dazu aus- und eingeführt werden.

Um das Eindringen von Staub zu vermeiden, ist ferner an der Unterseite der Öffnung 8 an der Stirnseite 2 eine längliche Zunge 4 vorgesehen, welche die Austrittsöffnung verschließt. Dies ist allerdings flexibel und ausbiegbar gestaltet, so daß sie im Vergleich zu Sollbruchstellen nicht herausgebrochen werden muß, um Kabel ein- oder auszuführen, sondern dazu lediglich leicht nach unten gebogen wird. Das eröffnet auch die Möglichkeit, die Abschlußkappe 1 lediglich zum Verschließen der Stirnseite einer Tragschiene zu verwenden, ohne dabei auch Kabel ein- oder auszuführen.

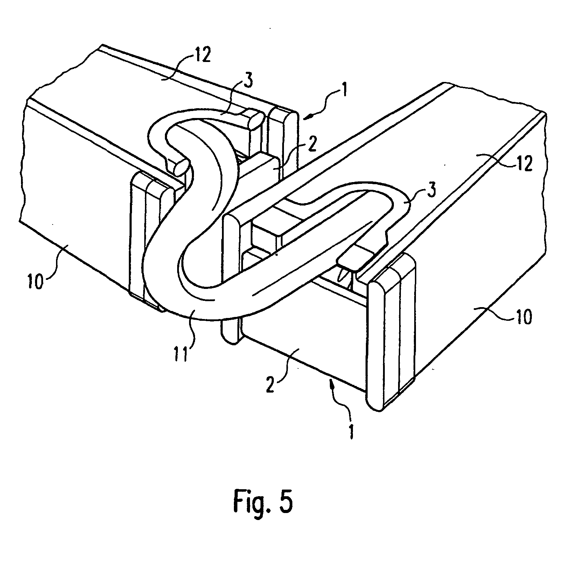

Fig. 5 zeigt schließlich zwei Tragschienen 10, welche jeweils an ihren Stirnseiten mit der erfindungsgemäßen Abschlußkappe 1 verschlossen sind. Ein Kabelstrang 11 ist dabei durch die beiden Austrittsöffnung der Abschlußkappe 1 geführt und verbindet die beiden Tragschienen 10. Im vorliegenden Fall erstreckt sich der Kabelstrang 11 jeweils in Längsrichtung der Tragschiene 10, er könnte allerdings auch ohne aufwendige Schleifen zu bilden, senkrecht dazu aus der Austrittsöffnung herausgeführt werden. Der Darstellung in Fig. 5 ist ferner zu entnehmen, daß sich das Kopfteil 3 in eine entsprechende an der Kopfseite 12 der Tragschiene 10 vorgesehene Ausnehmung erstreckt.

Die erfindungsgemäße Lösung bietet somit auf einfache Weise die Möglichkeit, Kabelstränge in eine mit einer Abschlußkappe versehene Tragschiene ein- oder auszuführen, wobei entsprechend dem Anwendungsgebiet die Kabel sowohl in Längsrichtung der Tragschiene als auch senkrecht dazu herausgeführt werden können. Die die Austrittsöffnung verschließende Zunge gewährleistet ferner einen wirksamen Schutz vor dem Eindringen von Staub.

## Patentansprüche

1. Abschlußkappe (1) für eine Tragschiene (10) eines Stromschienensystems,
wobei die Abschlußkappe (1) an dem stirnseitigen Ende der Tragschiene (10) anzuordnen ist und eine Austrittsöffnung für Stromversorgungs- und/oder Datenübertragungsleitungen (11) aufweist,
**dadurch gekennzeichnet,**
**daß** sich die Austrittsöffnung in zwei zueinander senkrecht angeordneten Ebenen erstreckt, wobei die eine Ebene im wesentlichen parallel und die andere Ebene im wesentlichen senkrecht zur Längsrichtung der Tragschiene (10) angeordnet ist.

2. Abschlußkappe nach Anspruch 1,
**dadurch gekennzeichnet,**
**daß** die eine Ebene durch die Kopfseite (12) und die andere Ebene durch die Stirnseite der Tragschiene (10) gebildet wird.

3. Abschlußkappe nach Anspruch 1 oder 2,
**dadurch gekennzeichnet,**
**daß** diese eine die Stirnseite bildende Stirnwand (2) sowie ein senkrecht dazu angeordnetes Kopfteil (3) aufweist.

4. Abschlußkappe nach Anspruch 3,
**dadurch gekennzeichnet,**
**daß** das Kopfteil (3) dazu vorgesehen ist, in eine an der Kopfseite (12) der Tragschiene (10) vorgesehene Ausnehmung einzugreifen.

5. Abschlußkappe nach einem der vorherigen Ansprüche,
**dadurch gekennzeichnet,**
**daß** diese eine an einer Seite der Austrittsöffnung befestigte und die Austrittsöffnung zumindest teilweise verschließende ausbiegbare Zunge (4) aufweist.

6. Tragschiene (10) für ein Stromschienensystem mit zumindest einer an einer Stirnseite der Tragschiene (10) angeordneten Abschlußkappe (1), welche eine Austrittsöffnung für Stromversorgungs- und/oder Datenübertragungsleitungen (11) aufweist bzw. in Zusammenwirkung mit der Tragschiene (10) eine Austrittsöffnung bildet,
**dadurch gekennzeichnet, daß** sich die Austrittsöffnung in zwei zueinander senkrecht angeordneten Ebenen erstreckt, wobei die eine Ebene im wesentlichen parallel und die andere Ebene im wesentlichen senkrecht zur Längsrichtung der Tragschiene (10) angeordnet ist.

## Claims

1. End cap (1) for a mounting rail (10) of a current rail system,
wherein the end cap (1) is to be arranged at the end face end of the mounting rail (10) and has an exit opening for current supply and/or for data transmission lines (11),
**characterized in that**,
the exit opening extends in two planes arranged perpendicularly to one another, wherein the one plane is arranged substantially parallel to and the other plane substantially perpendicularly to the longitudinal direction of the mounting rail (10).

2. End cap according to claim 2,
**characterized in that**,
the one plane is formed by the top side (12) and the other plane by the end face of the mounting rail (10).

3. End cap according to claim 1 or 2,
**characterized in that**,
this has an end face wall (2) forming the end face and a top part (3) arranged perpendicularly thereto.

4. End cap according to claim 3,
**characterized in that**,
the top part (3) is provided for engaging into a recess provided at the top side (12) of the mounting rail (10).

5. End cap according to any preceding claim,
**characterized in that**,
this has an outwardly bendable tongue (4) fastened at one side of the exit opening and at least partially closing the exit opening.

6. Mounting rail (10) for a current rail system having at least one end cap (1) arranged at an end face of the mounting rail (10), which end cap has an exit opening for current supply and/or data transmission lines or in co-operation with the mounting rail (10) forms an exit opening,
**characterized in that**,
the exit opening extends in two planes arranged perpendicularly to one another, wherein the one plane is arranged substantially parallel to and the other plane substantially perpendicularly to the longitudinal direction of the mounting rail (10).

## Revendications

1. Embout (1) destiné à un rail de support (10) d'un système de rail de courant, dans lequel l'embout (1) est destiné à être disposé sur une extrémité frontale du rail porteur (10) et présente une ouverture de sortie pour les lignes d'alimentation de courant et/ou de transfert de données (11), **caractérisé en ce que** l'ouverture de sortie s'étend en deux plans disposés perpendiculairement entre eux, de sorte qu'un plan est disposé de façon sensiblement parallèle et l'autre plan est disposé de façon sensiblement perpendiculaire à la direction longitudinale du rail de support (10).

2. Embout selon la revendication 1, **caractérisé en ce que** un plan est formé à travers le côté de tête (12) et l'autre plan est formé à travers le côté frontal du rail support (10).

3. Embout selon la revendication 1 ou 2, **caractérisé en ce qu'**il présente une paroi frontale (2) formant le côté frontal, ainsi qu'une partie de tête (3) disposée perpendiculairement à celui-ci.

4. Embout selon la revendication 3,
**caractérisé en ce que** la partie de tête (3) est prévue de façon à s'engrener dans un évidement prévu sur le côté de tête (12) du rail porteur (10).

5. Embout selon l'une des revendications précédentes, **caractérisé en ce qu'**il présente une languette (4) pliable fixée sur un côté de l'ouverture de sortie et obturant au moins partiellement l'ouverture de sortie.

6. Rail de support (10) pour un système de rail de courant avec au moins un embout (1) disposé sur un côté frontal du rail de support (10), embout qui comporte une ouverture de sortie pour les lignes d'alimentation de courant et/ou de transfert de données (11) ou forme une ouverture de sortie en coopération avec le rail de support (10),
**caractérisé en ce que** l'ouverture de sortie s'étend en deux plans disposés perpendiculairement entre eux, de sorte qu'un plan est essentiellement parallèle et l'autre plan est essentiellement perpendiculaire à la direction longitudinale du rail de support (10).
